# EUROPEAN PATENT SPECIFICATION

(11) **EP 1 300 068 B1**
(45) Date of publication and mention of the grant of the patent: **28.12.2005**
(21) Application number: 02079134.9
(22) Date of filing: 03.10.2002
(51) Int. Cl.: A01K 1/12

(54) **A device for and a method of performing a treatment on an animal.**
Vorrichtung und Verfahren zur Ausführung einer Tierbehandlung
Dispositif et méthode pour réaliser un traitement sur un animal

(30) Priority: 05.10.2001 NL 1019117
(43) Date of publication of application: 09.04.2003
(73) Proprietor: Lely Enterprises AG, 6300 ZUG (CH)
(72) Inventor: Fransen, Renatus Ignatius Josephus, 3135 ZD Vlaardingen (NL); van den Berg, Karel, 2971 BR Bleskensgraaf (NL)
(74) Representative: Corten, Maurice Jean F.M.

(56) References cited:
- EP-A- 0 647 390
- WO-A-00/53002
- WO-A-01/28316
- US-A- 4 006 712
- US-A- 6 158 394
- DATABASE WPI Section PQ, Week 198822 Derwent Publications Ltd., London, GB; Class P13, AN 1988-153639 XP002254339 & SU 1 349 736 A (LEONOV A D) 7 November 1987 (1987-11-07)

## Description

The invention relates to a device for performing an animal related treatment on an animal, according to the preamble of claim 1.

Such a device is known from US-A-4,006,712. In this known device the entire floor is movable from a milking position in which a farmer - without having to assume a stooping position - can milk a cow that is standing on the floor, to a leaving-position in which the cow can leave the floor.

It is an object of the invention to provide an alternative device, by means of which other functions are also possible.

To this end, according to the invention a device of the type described above comprises the measures of the characterizing part of Claim 1. Owing to the fact that with the aid of the position signals the height of the floor and accordingly the height position of the animal can be adjusted, it is possible to move the animal into an at least substantially optimum position for the animal related treatment concerned.

In a preferred embodiment, the lifting device is provided with at least two hydraulically or pneumatically operated cylinders, which act upon the floor opposite each other. In order to obtain a more stable support of the floor in a technically simpler and/or cheaper way, it is preferable, in particular if the floor is substantially rectangular, for the lifting device to be provided with three hydraulically or pneumatically operated cylinders, two of which are placed near the corners of one of the short rectangular sides, and the third of which is placed in the centre of the other short rectangular side. Alternatively, the lifting device is provided with four hydraulically or pneumatically operated cylinders, each of the cylinders being placed near a corner of the floor. In these embodiments it is also possible to adjust the floor in such a way that said floor assumes a slanting position.

It is pointed out here that it is known per se from International Patent Application WO 01/28316 to swing the floor about a horizontal axis, so that the floor can assume a slanting position for the purpose of removing an animal from the box.

It is further advantageous for the device to be provided with a presence detector for detecting the presence of an animal in the box, and for emitting a presence signal. Such a presence signal can be, for example, a signal that is perceptible to the manager of the device, so that said manager can go to the box for a manual, animal related action, if desired.

In one embodiment of a device according to the invention, the lifting device is controlled by means of the presence signal. This means that the animal can already be located in a position that is advantageous for the animal related treatment when the manager arrives at the box.

In order to make it simple for an animal to go into an empty box, when the presence signal indicates that no animal is present in the box, the lifting device is controlled in such a way that the floor is placed in a substantially horizontal rest position.

In order to remove an animal from a box, in one embodiment of a device according to the invention, the box is provided with an exit and with a drive-out signal-generating device that emits a signal to the lifting device, in order to control the lifting device in such a way that an animal moves to, and preferably through, the exit.

Such a drive-out signal-generating device can be formed by, for example, an apparatus for performing the animal related treatment that emits a treatment signal that indicates that the treatment has been completed.

The lifting device in that case is preferably controllable in such a way that the floor slopes down towards the exit. Alternatively or additionally, the lifting device is controllable in such a way that the floor performs a wobbling movement. An animal experiences such a wobbling movement as unpleasant and then has the inclination to leave the box.

The invention also relates to a method for performing an animal related treatment on an animal, in which method a device according to the invention is used, characterized in that the method comprises the step of detecting the start and the finish of the animal related treatment, and the step of driving the lifting device only during the animal related treatment. The animal related treatment is milking an animal, preliminary stimulation of an animal, massaging an animal or cleaning the udder of a dairy animal.

The invention will now be explained in greater detail with reference to the appended drawings.
Figure 1 shows a top view of a device for milking an animal, which device is provided with a milking box, which has a robot arm construction and a milking floor, which lies substantially in the horizontal plane;
Figure 2 shows a side view of the device illustrated in Figure 1, with the robot arm construction in the rest position
Figure 3 shows a perspective view of a lifting device for lifting the milking floor;
Figure 4 shows an operating diagram of a lifting device formed by four cylinders;
Figure 5 shows an operating diagram of a lifting device formed by three cylinders;
Figure 6 shows diagrammatically a milking floor with a grid; and
Figure 7 shows diagrammatically a cross section of the grid of Figure 6.

The invention will be explained below with reference to a device for milking a dairy animal, in particular a cow. It will, however, be clear that, in addition to milking as an animal related treatment, any other treatment is applicable. Examples of other treatments are cleaning at least parts of an animal, such as the teats and/or the udder of a dairy animal, massaging at least parts of an animal, preliminary treatment of the teats and/or the udder of a dairy animal. The box contains equipment for performing the animal related treatment, depending on said treatment.

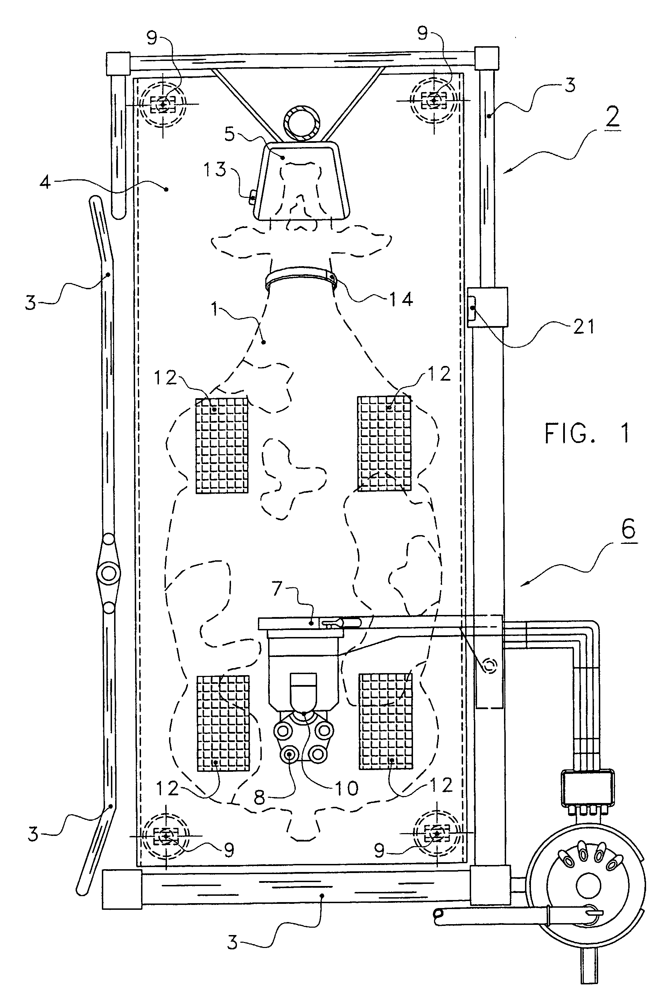

A device for milking a cow 1 is shown in the top view of Figure 1. The device is provided with a box 2, which has railings 3 that give the cow limited freedom of movement. The box 2 is provided with a milking floor 4, which lies substantially in the horizontal plane, on which floor the cow can stand.

The cow 1 can walk onto the milking floor 4 from the side at the back, while the cow 1 can leave the milking floor again from the same side at the front. Owing to the fact that the front of box 2 is provided with a feed unit 5, the cow 1 will go sufficiently far forward and reach a position in which it can easily be milked. In order to move the cow 1 into a suitable height for milking, the milking floor 4 is movable up respectively down in its entirety substantially in the vertical direction with the aid of a lifting means in the form of a lifting device 9. In the example shown in the figure, the milking floor 4 is substantially rectangular. In this case the lifting device 9 is provided with four hydraulically or pneumatically operated cylinders, each of the cylinders being placed near a corner of the milking floor 4.

It will be clear that the invention is not limited to a lifting device containing four cylinders. It is likewise possible, in the event of the milking floor 4 being substantially rectangular, for the lifting device to be provided with three hydraulically or pneumatically operated cylinders, two of which are placed near the corners of one of the short rectangular sides, and the third of which is placed in the centre of the other short rectangular side. Additionally, the milking floor needs not be rectangular, but may be of any other shape. Furthermore, in some cases a lifting device that is provided with at least two hydraulically or pneumatically operated cylinders that act upon the milking floor opposite each other would suffice.

A milking robot 6 for the automatic milking of animals is movably fixed on the other longitudinal side of the box 2 from that on which the entrance and exit are situated. The milking robot 6 has a robot arm construction 7, bearing teat cups 8, which can be connected to the cow's teats.

By means of a computer (not shown in the figures), it is possible to move the milking robot 6 from a rest position in the longitudinal direction of the box 2 to a starting position, in which the robot arm construction 7 of the milking robot 6 is placed under the cow present on the milking floor 4. The movements of the cow 1 are followed further. In order to ensure that the robot arm construction 7 can connect the teat cups 8 accurately to the teats of the cow 1, a position-determining device 10, which is known per se, is provided, in order to determine the position of the teats and/or the udder of the cow. The position-determining device 10 emits position signals depending upon the measured position, the lifting device 9 being controlled by means of the position signals. If, for example, the position-determining device 10 indicates that the cow 1 is standing too low down for the teat cups 8 to be connected, the position signals emitted are used to make the lifting device 9 move the cow 1 up until the correct position has been reached. Although in the example shown the position-determining device 10 is situated on the robot arm construction 7, a position-determining device can alternatively or additionally be disposed on, for example, the railings 3.

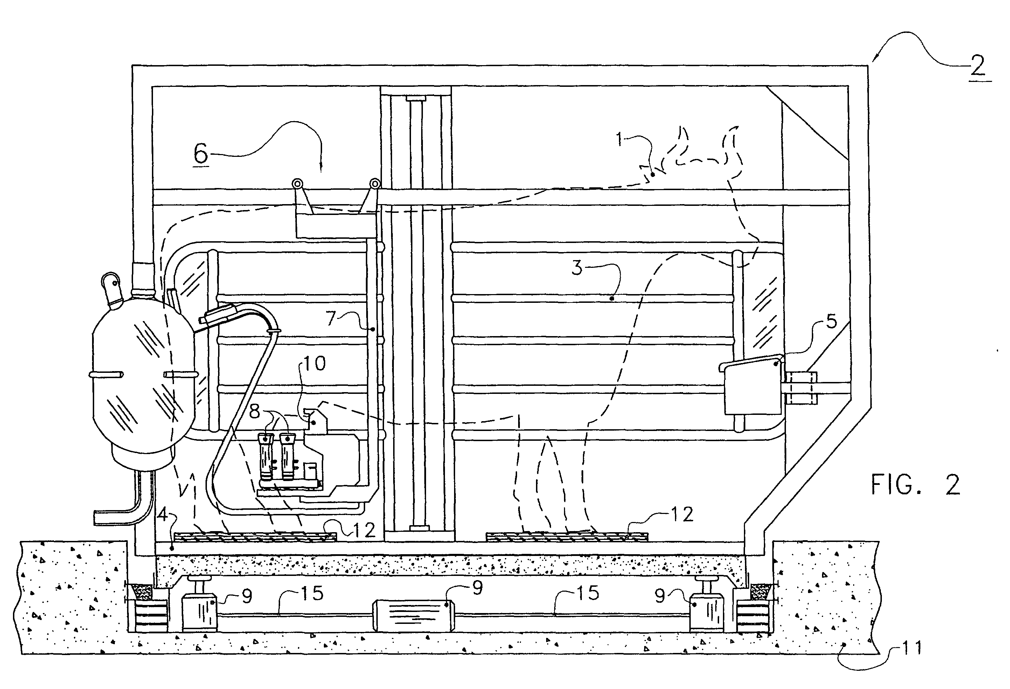

Figure 2 shows a side view of the device illustrated in Figure 1, in this case the robot arm construction 7 being in the rest position and the milking floor 4 being at the same height as the ground 11.

The device shown in Figures 1 and 2 further comprises a presence detector 12, for detecting the presence of a cow in the box 2, and for emitting a presence signal. The lifting device 9 is controlled by means of the presence signal; in particular if the presence signal indicates that there is no cow in the box 2, the lifting device 9 is controlled in such a way that the milking floor 4 is placed in a substantially horizontal rest position, at least substantially parallel to the ground 11. In the exemplary embodiment illustrated, the presence detector is formed by pressure-sensitive elements 12, which in the exemplary embodiment are disposed in the milking floor 4. In particular, the pressure-sensitive elements 12 are disposed in a sunken part of the milking floor 4, so that they lie flush with the milking floor 4. It will, however, be clear that the presence detector, alternatively, can comprise other components, such as an IR detector, an image camera or the like. In particular, the presence detector is formed by the lifting device 9 itself, so that no separate components for detecting the presence of an animal are necessary. When an animal moves onto the milking floor, this is detected by a change in the pressure of the lifting device 9.

The pressure-sensitive elements 12 can be formed by piezoelectric elements that are otherwise known per se. In the exemplary embodiment according to Figure 1, the pressure-sensitive elements are disposed at four points in the milking floor 4. The places at which the pressure-sensitive elements 12 are disposed are selected here in such a way that when a cow enters the box 2 she stands with her legs on all four of the pressure-sensitive elements. The pressure-sensitive elements 12 can also each be constructed from a number of pressure cells situated alongside each other. Said pressure cells can be in the form of electromechanical contacts, as further described in EP-A-0 572 068.

The device according to the invention is further provided with an animal recognition system, which is linked to the computer of the milking robot 6. The animal recognition system is formed by a sensor 13, which is disposed near the feed unit 5 and is linked to the computer, and a transponder 14 disposed around the neck of the cow 1. The lifting device 9 is advantageously partially controlled by means of data from the animal recognition system. In particular, the computer can contain data relating to standard height settings of the cow concerned, so that in the first instance the lifting device 9 is lifted to a standard height that is appropriate for that particular cow, after which the position-determining device 10 can provide for an accurate, current height setting if necessary.

The device described above functions as follows:

When a cow 1 enters the milking box 2, the sensor 13 receives from the transponder 14 a code that is unique to the cow 1. On the basis of said code, the computer linked to the sensor 13 determines which cow has moved onto the milking floor 4. In the computer (otherwise not shown) all data known about the cow 1 is retrieved and held ready for use. After the cow 1 has moved onto the milking floor 4, the pressure-sensitive elements 12 are activated by the fact that the cow is standing with her feet on said elements 12. Since the surface area of the pressure-sensitive elements 12 is many times greater than the surface area of the underside of the feet of the cow 1, only a number of pressure cells are depressed. The pressure cells depressed by the feet of the cow 1 emit a signal to the computer, on the basis of which signal it can be determined exactly where the cow 1 is standing with her feet on the milking floor 4. For this purpose, the position of each pressure cell is stored in the memory of the computer. The position of the udder and/or the teats relative to the milking floor 4 is also stored for each cow in the memory of the computer. The position of the milking floor 4 relative to the robot arm construction 7 is measured, for example by a height meter 21 (Figure 1) that is known per se, disposed on the railings 3, and this position is transmitted to the computer. In this way, not only the position of the milking floor 4 relative to the robot arm construction is known, but also the position of the teats and the udder relative to the robot arm construction 7. This means that the lifting device 9 can be controlled in such a way that the teats and the udder assume a position relative to the robot arm construction 7 that is correct for milking.

It will be clear that the very fact that the lifting device 9 can also determine the centre of gravity of the animal means that it is particularly simple to determine the position of the udder of a dairy animal purely and solely by means of the lifting device, without making use of the pressure-sensitive elements. A combination of the lifting device and the pressure-sensitive elements for determining the position of the udder of a dairy animal can in some cases, of course, provide a greater accuracy of position.

It will be clear that the lifting device needs be activated only when the cow 1 is actually going to be subjected to a milking process. For the sake of simplicity of description, the milking process, which is known per se, and in which the milking robot 6 connects the teat cups automatically to the teats etc. will not be described in any further detail here, since this process is known to the person skilled in the art. The milking robot 6 is therefore also designed for providing a treatment signal, indicating the start and/or the finish of and/or the engagement in the milking process. In order to ensure that the lifting device 9 is not activated unnecessarily, the lifting device 9 is driven depending on the treatment signal. For example, when a cow does not need to be milked, the milking floor 4 is not taken into a position that is designed for milking.

When the milking process has been completed, this is indicated by the treatment signal. Said treatment signal can then also serve as a driving-out signal, at least if no further treatments need be performed on the cow 1 in the box 2. This signal is emitted to the lifting device 9, in order to control the latter in such a way that the cow moves to, and preferably through, the exit. Since the exit is situated at the side of the box 2, the lifting device 9 has to tilt the milking floor in at least two directions, so that the milking floor 4 slopes downwards towards the exit. It is pointed out here that this tilting in at least two directions cannot be achieved with the device known from the International Patent Application WO 01/28316.

Apart from the fact that the milking floor 4 is caused to slope towards the exit, a cow is also induced to leave the box 2 by controlling the lifting device 9 in such a way that the milking floor 4 performs a wobbling movement. The wobbling movement must in that case be such that said wobbling movement is experienced as unpleasant by the cow concerned.

It has in fact been found that, depending on the cow, a wobbling movement can also have a stimulating effect on the cow, with the result that, for example, the milking produces a better result, for example produces a greater yield, and/or is of shorter duration. In this way, during the milking process the lifting device is preferably controlled in such a way, with the aid of data stored in the computer, that the animal is stimulated during the milking process. If desired, this may be combined with music that is stimulating for the cow. Here again, the lifting device is controlled depending on the treatment signal.

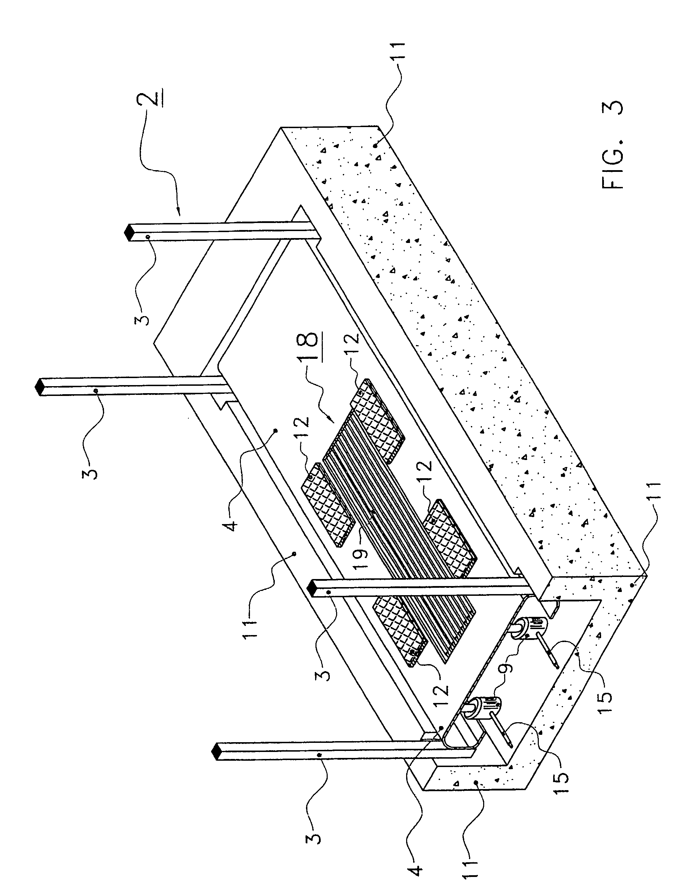

Figure 3 shows very diagrammatically the device according to the invention, the pressure lines 15 for operating the lifting device 9 being indicated diagrammatically.

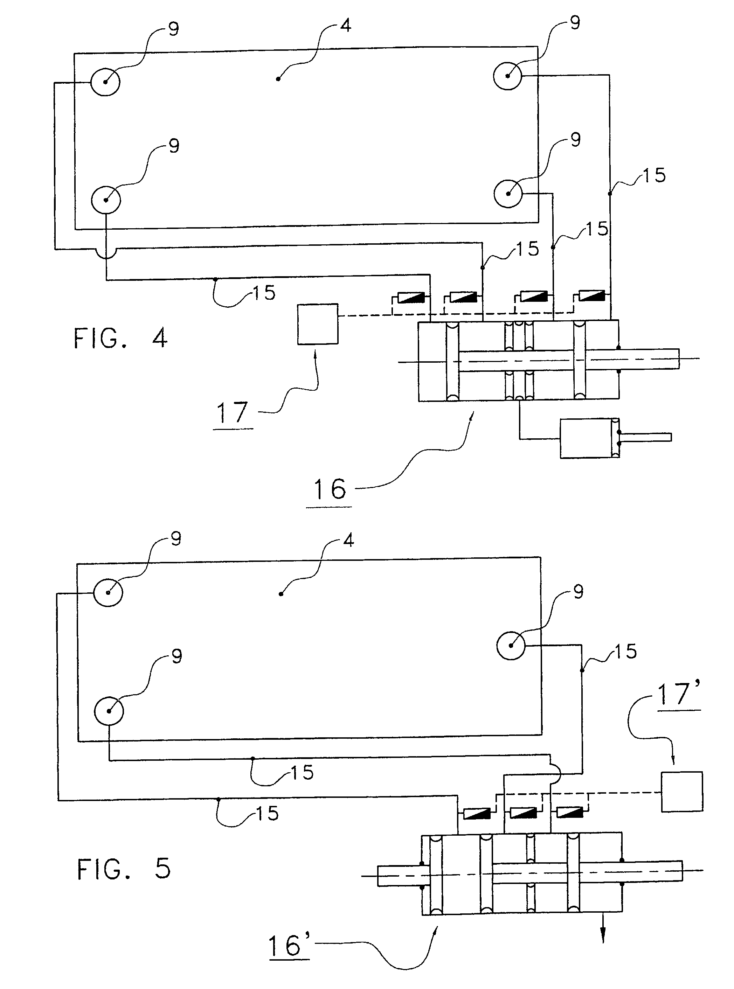

Figure 4 shows diagrammatically an example of a hydraulic control device 16 for operating the lifting device 9. Said control device 16 also forms part of the lifting device 9, and is provided with a weighing sensor 17, which by means of the pressure can measure the weight of the cow 1 standing on the milking floor 4. In this way, the function of weighing and determining the position of the udder is integrated in the lifting device 9.

Figure 5 shows diagrammatically a different embodiment of the hydraulic control device 16', designed for the embodiment with three lifting cylinders 9. Here again, a weighing sensor 17' is integrated in the control device 16'.

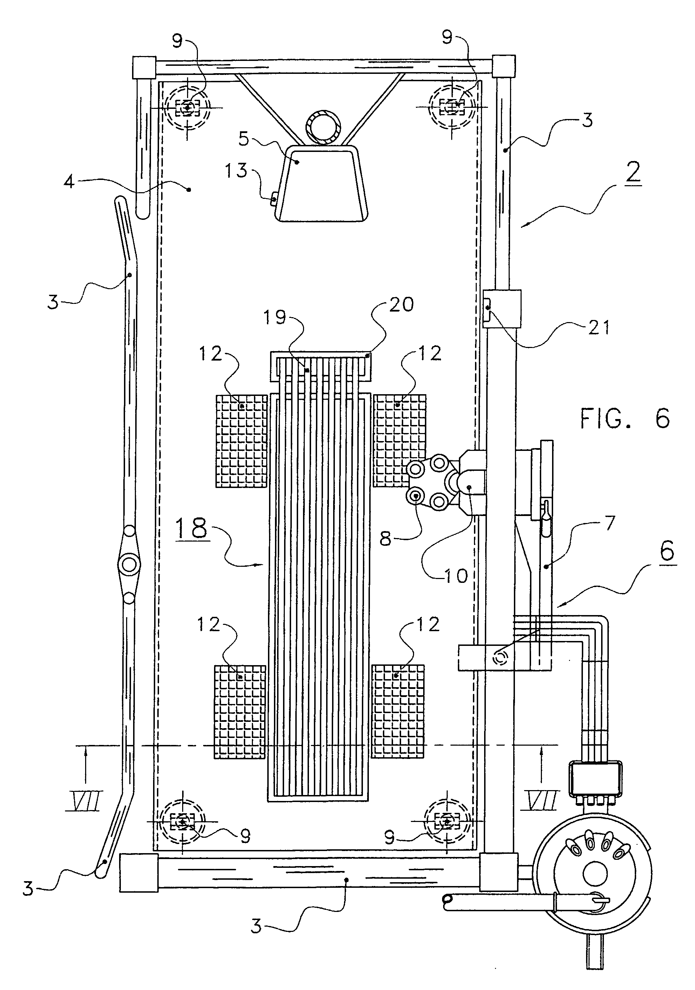

Figure 6 shows very diagrammatically the embodiment in which the milking floor 4 is provided with a grid 18 comprising grid parts 19, the grid parts being movable relative to each other by means of a grid-part-moving unit 20. The grid 18 is preferably placed between the two pressure-sensitive elements 12 lying furthest away from the feed unit 5. In other words, the grid 18 is disposed on the milking floor 4 at a position between the usual standing places of the cow's hind feet.

As described above, the pressure cells depressed by the feet of the cow 1 emit a signal to the computer, on the basis of which it can be determined where exactly the cow 1 is standing with her feet on the milking floor 4. If it is found that only one foot is standing on a pressure-sensitive element 12, it must be ensured that the second hind foot moves into position on the other element 12. For this purpose, the grid-part-moving unit 20 is activated. The grid-part-moving unit 20 makes the grid parts 19 feel unpleasant for that cow, so that the cow with her hind foot on the grid 18 moves into another position. The above system is operated until such time as the other hind foot is also resting on an element 12. This position with the cow's two hind feet resting on an element 12 is an at least substantially ideal position for the milking process.

If the presence signal indicates that no cow is present in the box, the grid-part-moving unit 20 is controlled in such a way that the grid parts 19 are placed in a rest position. This means that here too the grid parts are preferably moved depending on a treatment signal.

The grid 18 can also be used for driving a cow out of the box. For this purpose, in the same way as described above, a drive-out signal-generating device (the milking robot in the present case) can emit a signal to the grid-part-moving unit 20, in order to move the grid parts 19 in such a way that the cow moves to, and preferably through, the exit of the box 2.

Here again, it is advantageous if the animal recognition system 13, 14 controls the grid-part-moving unit 20, so that a suitable movement of the grid parts can be obtained for each animal.

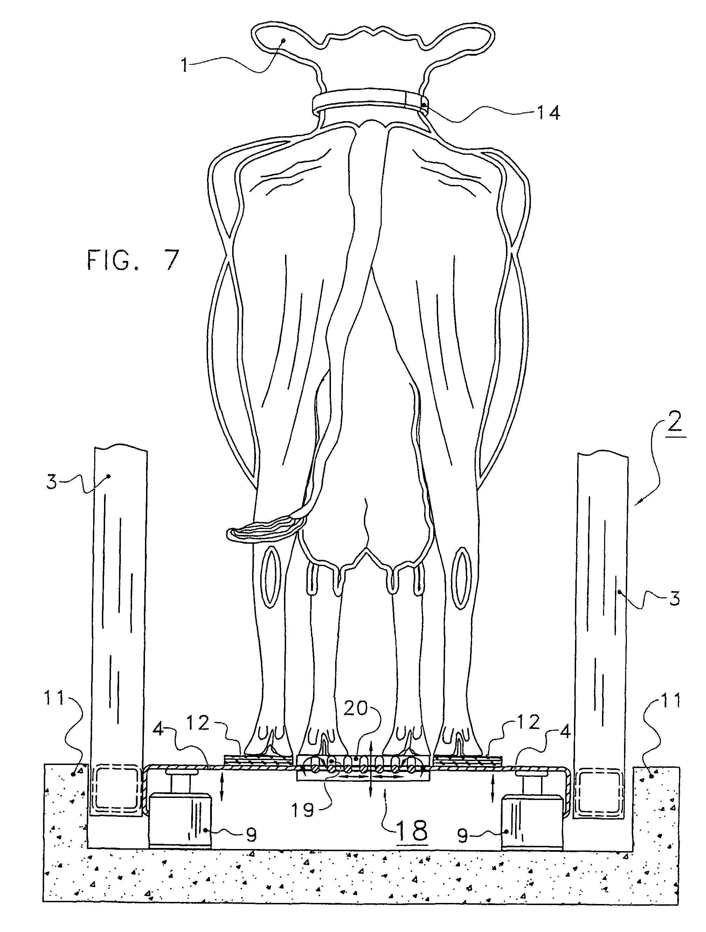

As shown diagrammatically in Figure 7 by arrows, the grid-part-moving unit 20 can set the grid parts 19 in rotation, making them move to and fro alternately in the plane of the grid 18 or in fact making them move up and down alternately crosswise to the plane of the grid. In this case, in order to give the cow sufficient support, it is preferable to subdivide the grid parts into at least two grid part groups. This means that one of the two groups can remain at a standstill, while the other group is set in motion and/or rotation.

In one embodiment, the floor on which the animal can stand is provided with a front floor part on which the animal can stand with its front feet, and with a rear floor part on which the animal can stand with its hind feet, the device being provided with a first lifting device for moving the front floor part up respectively down substantially in the vertical direction, and/or with a second lifting device for moving the rear floor part up respectively down substantially in the vertical direction. This makes it possible to determine the body weight of the animal more accurately, and allowance can be made for the influences of, inter alia, the contents of the rumen, bladder, intestines, udder and any equipment that is connected. Furthermore, various weighing factors may be assigned to the data coming from the front floor part and the rear floor part, so that the weight may be determined accurately (possibly using different formulae). Such a division of the weighing floor for determining the weight of an animal (in particular a pig) is known per se.

## Claims

1. Device for performing an animal related treatment on an animal, which device is provided with a box (2), the box (2) being provided with a floor (4), which lies substantially in the horizontal plane, on which floor the animal can stand, and with a lifting device (9) for moving the entire floor (4) up respectively down substantially in the vertical direction, **characterized in that** the device is provided with a position-determining device (10) for determining the position of a part to be treated of the animal, which position-determining device (10) emits position signals, and **in that** the lifting device (9) is controlled by means of the position signals.

2. Device according to Claim 1, **characterized in that** the lifting device (9) is provided with at least two hydraulically or pneumatically operated cylinders, which act upon the floor (4) opposite each other.

3. Device according to Claim 1 or 2, **characterized in that** the floor (4) is substantially rectangular, and **in that** the lifting device (9) is provided with three hydraulically or pneumatically operated cylinders, two of which are placed near the corners of one of the short rectangular sides, and the third of which is placed in the centre of the other short rectangular side.

4. Device according to Claim 1 or 2, **characterized in that** the floor (4) is substantially rectangular, and **in that** the lifting device (9) is provided with four hydraulically or pneumatically operated cylinders, each of the cylinders being placed near a corner of the floor (4).

5. Device according to one of the preceding claims, **characterized in that** the device is provided with a presence detector (12) for detecting the presence of an animal in the box (2), and for emitting a presence signal.

6. Device according to Claim 5, **characterized in that** the lifting device (9) is controlled by means of the presence signal.

7. Device according to Claim 6, **characterized in that** when the presence signal indicates that no animal is present in the box (2), the lifting device (9) is controlled in such a way that the floor (4) is placed in a substantially horizontal rest position.

8. Device according to one of the preceding claims, **characterized in that** the position-determining device or the presence detector is integrated in the lifting device.

9. Device as claimed in one of the preceding claims 5 to 7, **characterized in that** the presence detector is integrated in the lifting device.

10. Device according to one of the preceding claims, **characterized in that** the box (2) is provided with an exit and with a drive-out signal-generating device that emits a signal to the lifting device (9), in order to control the lifting device (9) in such a way that an animal moves to, and preferably through, the exit.

11. Device according to Claim 10, **characterized in that** the lifting device (9) is controllable in such a way that the floor (4) slopes down towards the exit.

12. Device according to one of the preceding claims, **characterized in that** the device is provided with an apparatus for performing an animal related treatment, and for providing a treatment signal indicating the start and/or the finish of and/or the engagement in the animal related treatment.

13. Device according to Claim 12, **characterized in that,** depending on the treatment signal, the lifting device (9) is controllable in such a way that the animal is stimulated as regards the animal related treatment.

14. Device according to one of the preceding claims, **characterized in that** the lifting device (9) is controllable in such a way that the floor (4) performs a wobbling movement.

15. Device according to one of the preceding claims, **characterized in that** the device is provided with an animal recognition system, the lifting device (9) being partially controlled by means of data from the animal recognition system.

16. Device according to one of the preceding claims, **characterized in that** the device is provided with weighing sensors (17, 17'), in order to determine the weight of the animal.

17. Device according to claim 16, **characterized in that** the weighing sensors (17, 17') are integrated in the lifting device (9).

18. Device according to one of the preceding claims, **characterized in that** the floor (4) is provided with a grid (18) comprising grid parts (19), the grid parts (19) being movable relative to each other by means of a grid-part-moving unit (20).

19. Method for performing an animal related treatment on an animal, in which method a device according to one of the preceding claims is used, **characterized in that** the method comprises the step of detecting the start and the finish of the animal related treatment, and the step of driving the lifting device only during the animal related treatment.

20. Method according to Claim 19, **characterized in that** the animal related treatment is milking an animal.

21. Method according to Claim 19, **characterized in that** the animal related treatment is pre-stimulation of an animal.

22. Method according to Claim 19, **characterized in that** the animal related treatment is massaging an animal.

23. Method according to Claim 19, **characterized in that** the animal related treatment is cleaning the udder of a dairy animal.

## Patentansprüche

1. Vorrichtung zum Durchführen einer tierspezifischen Behandlung bei einem Tier, wobei die Vorrichtung mit einer Box (2) versehen ist, wobei die Box (2) mit einem Boden (4) versehen ist, der im wesentlichen in der horizontalen Ebene liegt, und auf dem das Tier stehen kann, sowie mit einer Hebevorrichtung (9), um den gesamten Boden (4) im wesentlichen in vertikaler Richtung nach oben bzw. nach unten zu bewegen,
**dadurch gekennzeichnet, daß** die Vorrichtung mit einer Positionsermittlungsvorrichtung (10) zum Ermitteln der Position eines zu behandelnden Teiles des Tieres versehen ist, wobei die Positionsermittlungsvorrichtung (10) Positionssignale ausgibt, und daß die Hebevorrichtung (9) mit Hilfe der Positionssignale gesteuert wird.

2. Vorrichtung nach Anspruch 1,
**dadurch gekennzeichnet, daß** die Hebevorrichtung (9) mit mindestens zwei hydraulisch oder pneumatisch betätigten Zylindern versehen ist, die einander gegenüberliegend auf den Boden (4) einwirken.

3. Vorrichtung nach Anspruch 1 oder 2,
**dadurch gekennzeichnet, daß** der Boden (4) im wesentlichen rechteckig ist, und daß die Hebevorrichtung (9) mit drei hydraulisch oder pneumatisch betätigten Zylindern versehen ist, von denen zwei nahe den Ecken einer der Schmalseiten des Rechtecks und der dritte in der Mitte der anderen Schmalseite des Rechtecks angeordnet sind.

4. Vorrichtung nach Anspruch 1 oder 2,
**dadurch gekennzeichnet, daß** der Boden (4) im wesentlichen rechteckig ist, und daß die Hebevorrichtung (9) mit vier hydraulisch oder pneumatisch betätigten Zylindern versehen ist, wobei jeder der Zylinder nahe einer Ecke des Bodens (4) angeordnet ist.

5. Vorrichtung nach einem der vorhergehenden Ansprüche,
**dadurch gekennzeichnet, daß** die Vorrichtung mit einem Anwesenheitsdetektor (12) versehen ist, um die Anwesenheit eines Tieres in der Box (2) zu ermitteln und ein Anwesenheitssignal zu geben.

6. Vorrichtung nach Anspruch 5,
**dadurch gekennzeichnet, daß** die Hebevorrichtung (9) mit Hilfe des Anwesenheitssignals gesteuert wird.

7. Vorrichtung nach Anspruch 6,
**dadurch gekennzeichnet, daß**, wenn das Anwesenheitssignal anzeigt, daß sich kein Tier in der Box (2) aufhält, die Hebevorrichtung (9) derart gesteuert wird, daß der Boden (4) in eine im wesentlichen horizontale Ruhelage eingestellt wird.

8. Vorrichtung nach einem der vorhergehenden Ansprüche,
**dadurch gekennzeichnet, daß** die Positionsermittlungsvorrichtung oder der Anwesenheitsdetektor in die Hebevorrichtung integriert ist.

9. Vorrichtung nach einem der vorhergehenden Ansprüche 5 bis 7,
**dadurch gekennzeichnet, daß** der Anwesenheitsdetektor in die Hebevorrichtung integriert ist.

10. Vorrichtung nach einem der vorhergehenden Ansprüche,
**dadurch gekennzeichnet, daß** die Box (2) mit einem Ausgang und mit einer Vorrichtung zum Erzeugen eines Austreibesignals versehen ist, die ein Signal an die Hebevorrichtung (9) gibt, um die Hebevorrichtung (9) derart zu steuern, daß sich ein Tier zum und vorzugsweise durch den Ausgang bewegt.

11. Vorrichtung nach Anspruch 10,
**dadurch gekennzeichnet, daß** die Hebevorrichtung (9) in der Weise steuerbar ist, daß der Boden (4) zum Ausgang geneigt ist.

12. Vorrichtung nach einem der vorhergehenden Ansprüche,
**dadurch gekennzeichnet, daß** die Vorrichtung mit einem Gerät zum Durchführen einer tierspezifischen Behandlung und zum Erzeugen eines Behandlungssignals versehen ist, das den Beginn und/oder das Ende und/oder die Durchführung der tierspezifischen Behandlung anzeigt.

13. Vorrichtung nach Anspruch 12,
**dadurch gekennzeichnet, daß** die Hebevorrichtung (9) in Abhängigkeit von dem Behandlungssignal in der Weise steuerbar ist, daß das Tier im Hinblick auf die tierspezifische Behandlung stimuliert wird.

14. Vorrichtung nach einem der vorhergehenden Ansprüche,
**dadurch gekennzeichnet, daß** die Hebevorrichtung (9) derart steuerbar ist, daß der Boden (4) eine schaukelnde Bewegung durchführt.

15. Vorrichtung nach einem der vorhergehenden Ansprüche,
**dadurch gekennzeichnet, daß** die Vorrichtung mit einem Tiererkennungssystem versehen ist, wobei die Hebevorrichtung (9) teilweise mit Hilfe von Daten des Tiererkennungssystems gesteuert wird.

16. Vorrichtung nach einem der vorhergehenden Ansprüche,
**dadurch gekennzeichnet, daß** die Vorrichtung mit Wägesensoren (17, 17') versehen ist, um das Gewicht des Tieres zu ermitteln.

17. Vorrichtung nach Anspruch 16,
**dadurch gekennzeichnet, daß** die Wägesensoren (17, 17') in die Hebevorrichtung (9) integriert sind.

18. Vorrichtung nach einem der vorhergehenden Ansprüche,
**dadurch gekennzeichnet, daß** der Boden (4) mit einem Gitterteile (19) umfassenden Gitter (18) versehen ist, wobei die Gitterteile (19) mit Hilfe einer Gitterteil-Bewegungseinheit (20) relativ zueinander bewegbar sind.

19. Verfahren zum Durchführen einer tierspezifischen Behandlung bei einem Tier, wobei bei dem Verfahren eine Vorrichtung nach einem der vorhergehenden Ansprüche verwendet wird,
**dadurch gekennzeichnet, daß** das Verfahren den Verfahrensschritt des Ermittelns des Anfangs und des Endes der tierspezifischen Behandlung sowie den Verfahrensschritt des Antreibens der Hebevorrichtung nur während der tierspezifischen Behandlung umfaßt.

20. Verfahren nach Anspruch 19,
**dadurch gekennzeichnet, daß** die tierspezifische Behandlung das Melken eines Tieres ist.

21. Verfahren nach Anspruch 19,
**dadurch gekennzeichnet, daß** die tierspezifische Behandlung eine Vorstimulierung eines Tieres ist.

22. Verfahren nach Anspruch 19,
**dadurch gekennzeichnet, daß** die tierspezifische Behandlung das Massieren eines Tieres ist.

23. Verfahren nach Anspruch 19,
**dadurch gekennzeichnet, daß** die tierspezifische Behandlung das Reinigen des Euters eines milchgebenden Tieres ist.

## Revendications

1. Dispositif pour réaliser un traitement sur un animal, lequel dispositif est pourvu d'un box (2), le box (2) étant pourvu d'un sol (4) qui se trouve sensiblement dans le plan horizontal, l'animal pouvant se tenir debout sur le sol, et d'un dispositif de levage (9) pour déplacer le sol entier (4) vers le haut et respectivement vers le bas sensiblement dans la direction verticale, **caractérisé en ce que** le dispositif est pourvu d'un dispositif de détermination de position (10) pour déterminer la position d'une partie destinée à être traitée de l'animal, lequel dispositif de détermination de position (10) émet des signaux de position, et **en ce que** le dispositif de levage (9) est contrôlé au moyen des signaux de position.

2. Dispositif selon la revendication 1, **caractérisé en ce que** le dispositif de levage (9) est pourvu d'au moins deux vérins hydrauliques ou pneumatiques qui agissent sur le sol (4) l'un en face de l'autre.

3. Dispositif selon la revendication 1 ou 2, **caractérisé en ce que** le sol (4) est sensiblement rectangulaire, et **en ce que** le dispositif de levage (9) est pourvu de trois vérins hydrauliques ou pneumatiques, dont deux sont placés près des coins d'un des côtés rectangulaires courts, et dont le troisième est placé au centre de l'autre côté rectangulaire court.

4. Dispositif selon la revendication 1 ou 2, **caractérisé en ce que** le sol (4) est sensiblement rectangulaire, et **en ce que** le dispositif de levage (9) est pourvu de quatre vérins hydrauliques ou pneumatiques, chacun des vérins étant placé près d'un coin du sol (4).

5. Dispositif selon l'une des revendications précédentes, **caractérisé en ce que** le dispositif est pourvu d'un détecteur de présence (12) pour détecter la présence d'un animal dans le box (2), et pour envoyer un signal de présence.

6. Dispositif selon la revendication 5, **caractérisé en ce que** le dispositif de levage (9) est contrôlé au moyen du signal de présence.

7. Dispositif selon la revendication 6, **caractérisé en ce que** lorsque le signal de présence indique qu'aucun animal n'est présent dans le box (2), le dispositif de levage (9) est contrôlé de manière telle que le sol (4) est placé dans une position de repos sensiblement horizontale.

8. Dispositif selon l'une des revendications précédentes, **caractérisé en ce que** le dispositif de détermination de position ou le détecteur de présence est intégré dans le dispositif de levage.

9. Dispositif selon l'une des revendications précédentes 5 à 7, **caractérisé en ce que** le détecteur de présence est intégré dans le dispositif de levage.

10. Dispositif selon l'une des revendications précédentes, **caractérisé en ce que** le box (2) est pourvu d'une sortie et d'un dispositif de génération de signal de sortie qui envoie un signal au dispositif de levage (9), afin de contrôler le dispositif de levage (9) de manière telle qu'un animal se déplace jusqu'à, et de préférence à travers, la sortie.

11. Dispositif selon la revendication 10, **caractérisé en ce que** le dispositif de levage (9) est contrôlable de manière telle que le sol (4) s'incline vers le bas vers la sortie.

12. Dispositif selon l'une des revendications précédentes, **caractérisé en ce que** le dispositif est pourvu d'un appareil pour réaliser un traitement d'un animal, et pour fournir un signal de traitement indiquant le commencement et/ou la fin et/ou l'engagement du traitement de l'animal.

13. Dispositif selon la revendication 12, **caractérisé en ce que**, suivant le signal de traitement, le dispositif de levage (9) est contrôlable de manière telle que l'animal est stimulé en ce qui concerne le traitement de l'animal.

14. Dispositif selon l'une des revendications précédentes, **caractérisé en ce que** le dispositif de levage (9) est contrôlable de manière telle que le sol (4) réalise un mouvement oscillant.

15. Dispositif selon l'une des revendications précédentes, **caractérisé en ce que** le dispositif est pourvu d'un système de reconnaissance d'animal, le dispositif de levage (9) étant partiellement contrôlé au moyen de données provenant du système de reconnaissance d'animal.

16. Dispositif selon l'une des revendications précédentes, **caractérisé en ce que** le dispositif est pourvu de capteurs de pesage (17, 17'), afin de déterminer le poids de l'animal.

17. Dispositif selon la revendication 16, **caractérisé en ce que** les capteurs de pesage (17, 17') sont intégrés dans le dispositif de levage (9).

18. Dispositif selon l'une des revendications précédentes, **caractérisé en ce que** le sol (4) est pourvu d'une grille (18) comprenant des parties de grille (19), les parties de grille (19) étant mobiles les unes par rapport aux autres au moyen d'une unité de déplacement de parties de grille (20).

19. Procédé pour réaliser un traitement d'un animal sur un animal, lequel procédé utilisant un dispositif selon l'une des revendications précédentes, **caractérisé en ce que** le procédé comprend l'étape consistant à détecter le commencement et la fin du traitement de l'animal, et l'étape consistant à entraîner le dispositif de levage seulement au cours du traitement de l'animal.

20. Procédé selon la revendication 19, **caractérisé en ce que** le traitement de l'animal est la traite d'un animal.

21. Procédé selon la revendication 19, **caractérisé en ce que** le traitement de l'animal est la pré-stimulation d'un animal.

22. Procédé selon la revendication 19, **caractérisé en ce que** le traitement de l'animal est le massage d'un animal.

23. Procédé selon la revendication 19, **caractérisé en ce que** le traitement de l'animal est le nettoyage du pis d'un animal laitier.
